Europäisches Patentamt

European Patent Office

Office européen des brevets

(11) Veröffentlichungsnummer: **0 181 620**
**B1**

(12) **EUROPÄISCHE PATENTSCHRIFT**

(45) Veröffentlichungstag der Patentschrift :
04.05.88

(51) Int. Cl.⁴ : **B 66 C 1/02**, B 65 G 47/91

(21) Anmeldenummer : 85114245.5

(22) Anmeldetag : 08.11.85

(54) Mechanisch aktivierbarer Sauger zum Anheben und Festhalten von Gegenständen.

(30) Priorität : 13.11.84 DE 3441478
13.11.84 DE 3441479

(43) Veröffentlichungstag der Anmeldung :
21.05.86 Patentblatt 86/21

(45) Bekanntmachung des Hinweises auf die Patenterteilung : 04.05.88 Patentblatt 88/18

(84) Benannte Vertragsstaaten :
AT BE CH DE FR GB IT LI LU NL SE

(56) Entgegenhaltungen :
DE-A- 1 921 513
DE-A- 2 551 538
DE-B- 1 176 816
DE-B- 1 259 540
GB-A- 1 083 187
GB-A- 1 180 510
US-A- 3 853 345
US-A- 3 923 177

(73) Patentinhaber : MANIA Elektronik Automatisation
Entwicklung und Gerätebau GmbH
Technologiepark
D-6395 Weilrod 8 (DE)

(72) Erfinder : Mang, Paul
Weilbergstrasse 2
D-6384 Schmitten 3 (DE)
Erfinder : Joppe, Werner
Luditzer Strasse 4
D-6392 Neu-Anspach (DE)
Erfinder : Schuch, Jörn
Bischof-Brand-Strasse 8
D-6370 Oberursel (DE)

(74) Vertreter : Ruschke, Hans Edvard et al
Patentanwälte Dipl.-Ing. Olaf Ruschke Dipl.-Ing. Hans
E. Ruschke Dipl,-Ing. Jürgen Rost Dipl.-Chem. Dr. U.
Rotter Pienzenauerstrasse 2
D-8000 München 80 (DE)

**Beschreibung**

Die vorliegende Erfindung betrifft einen mechanisch aktivierbaren Sauger zum Anheben und Festhalten von luftdurchlässigen Gegenständen nach dem Oberbegriff des Patentanspruches 1.

Es gibt in der Fördertechnik verschiedene Anwendungsfälle, in denen Greifer oder Hubmagnete oder dgl. zum Anheben, Festhalten und Abtransportieren von Gegenständen nicht brauchbar sind. In solchen Fällen greift man oft auf vakuumbetätigte Sauger zurück, die allerdings dann Schwierigkeiten bereiten, wenn die Gegenstände zumindest teilweise luftdurchlässig sind. In solchen Fällen muß man, sofern man nicht doch auf Sauger verzichten will oder kann, dafür Sorge tragen, daß der Sauger und das zugehörige Unterdrucksystem einen erheblichen Luft-Durchsatz zulassen, damit die wirksame Druckdifferenz eine ausreichende Kraftwirkung erzeugt.

Ein Beispiel solcher Anwendungsfälle ist die Funktionsprüfung von vorgebohrten, noch unbestückten Leiterplatten mit Hilfe von automatischen Leiterplattenprüfgeräten. Dabei besteht der Wunsch, die aus unmagnetischem Werkstoff bestehenden Leiterplatten problemlos anheben und weitertransportieren zu können, damit die Handhabung der Leiterplatten soweit wie möglich automatisiert werden kann. Ein Anheben der unmagnetischen Leiterplatten mit Hilfe von Magnetkräften ist natürlich nicht möglich, und eine mechanische Greifvorrichtung stößt insofern auf erhebliche Probleme, als die Umrisse der Leiterplatten sehr häufig wechseln können. Hiernach kommt an sich nur eine mit Unterdruck arbeitende Ansaugvorrichtung in Betracht, was aber wegen der Luftdurchlässigkeit der vorgebohrten Leiterplatten zu gewissen Problemen führt.

Es liegt auf der Hand, daß man solche Sauger angesichts des notwendigen hohen Luftdurchsatzes erst dann aktivieren will, wenn man die damit erzeugte Druckdifferenz benötigt, also beim Aufsetzen auf den anzuhebenden Gegenstand. Dabei ist es wünscheswert, daß die zur Aktivierung erforderliche Mechanik des Saugers den ohnehin schon benötigten hohen Luftdurchsatz nicht noch unnötig weiter erhöht.

Ein vergleichbarer Sauger mit einem Stößel zur mechanischen Aktivierung desselben ist aus der DE-A1-31 01 864 bekannt, wobei die vorliegende Erfindung von diesem Stand der Technik ausgeht. Hierbei wird das Ventilglied von einer Feder in Richtung auf die Ventilöffnung beaufschlagt, um letztere im Ruhezustand zu verschließen. In der Arbeitsstellung des Saugers trägt diese Feder dazu bei, die Hubkraft des Saugers zu verringern und/oder seinen Saugluftbedarf zu erhöhen, weil die Rückstellkraft der Feder um so größer wird, je weiter der Sauger öffnet.

Es ist also die der Erfindung zugrundeliegende Aufgabe, einen derartigen Sauger für hohen Luftdurchsatz derart auszubilden, daß die Vakuumpumpe nicht mehr als ohnehin notwendig belastet wird und nach der Aktivierung des Saugers keine Restkraft vom Stößel auf den anzuhebenden Gegenstand ausgeübt wird.

Diese Aufgabe wird in erfindungsgemäßer Weise durch die Merkmale des Patentanspruchs 1 gelöst.

Die Ansaugöffnung der Unterdruckkammer wird zunächst auch bei in letzterer anliegendem Unterdurck geschlossen gehalten, und zwar bis der durch die Ansaugöffnung hindurchragende Ventilstößel das Ventilglied entgegen der durch den Kolben erzeugten Schließkraft beim Aufsetzen des Saugers auf einen Gegenstand öffnet. Durch das mechanische Aufstoßen bewegt sich der mit dem Ventilglied verbundene Kolben in der Zylinderkammer aufwärts mit der Folge, daß der zunächst auf dem gesamten Steuerkolbenquerschnitt lastende Atmosphärendruck nur noch auf einen geringen Teil des Steuerkolbens in Form eines Ventilzapfens mit erheblich reduzierten Durchmesser einwirken kann, da der Ventilzapfen in die zur Zylinderkammer führende Belüftungsbohrung eintritt und den übrigen Teil des Steuerkolbens von der Wirkung des Atmosphärendrucks ausschließt. Die auf den Steuerkolben und somit das Ventilglied ausgeübte Schließkraft, die dem niedrigeren Druck in der Vakuumkammer und dem Staudruck der einströmenden Luft auf das Ventilglied entgegenwirkt, wird also aufgrund des Aufsetzens des Saugers schlagartig verringert, so daß der Sauger für den benötigten hohen Luftdurchsatz weit öffnet, wobei er nach einer solchen Aktivierung in dieser Ansaugstellung verbleibt (bis das Vakuum in der Unterdruckkammer abgebaut oder sogar umgekehrt wird). Somit wird die Unterdruckpumpe nur soweit wie unbedingt notwendig beansprucht. Wollte man die auf das Ventilglied entgegen der Wirkung des Unterdrucks und des Staudruckes ausgeübte Schließkraft mit Hilfe einer Druckfeder wie im Stand der Technik erzeugen, so müßte die Vakuumpumpe derart überdimensioniert sein, daß sie nach dem mechanischen Aufstoßen der Ventilglieder mit Hilfe des Ventilstössels auch noch die dann sogar erhöhte Schließkraft überwindet. Außerdem würde ein solcher federbelasteter Sauger nur einen relativ kleinen Öffnungsquerschnitt freigeben, während der erfindungsgemäße Sauger nach seiner mechanischen Aktivierung schlagartig weit aufmacht.

Die Sauger lassen sich mit besonderem Vorteil im Rahmen von Fördereinrichtungen zum Anheben von größeren luftdurchlässigen Gegenständen auch variabler Umrisse einsetzen, wenn man eine größere Anzahl derartiger Sauger gleichmäßig über eine großflächige Hebevorrichtung verteilt, wobei dann nur solche Sauger mechanisch aktiviert werden, die tatsächlich mit dem anzuhebenden Gegenstand in Kontakt kommen. Hierdurch gelingt es, den Saugluftbedarf und damit die Leistungsaufnahme der Vakuumpumpe nicht größer als ohnehin notwendig werden zu lassen.

Es liegt auf der Hand, daß eine derartige Hebevorrichtung, wie schon erwähnt, nicht ausschließlich für vorgebohrte Leiterplatten Verwendung finden kann. Es sind viele Fälle denkbar, in denen flache luftdurchlässige Gegenstände mit variablen Umrissen und aus unmagnetischem Material im Rahmen einer automatisierten Produktion angehoben und weitertransportiert werden müssen.

Drei Ausführungsbeispiele von erfindungsgemäßen Saugern, die in einer Aggregation auch als flächige Hebevorrichtung dienen können, werden im Nachfolgenden unter Bezugnahme auf die beigefügten Zeichnungen näher beschrieben. In diesen zeigt :

Fig. 1 einen Vertikalschnitt durch einen Sauger, der konstruktiv besonders einfach ist,

Fig. 2 den gleichen Sauger wie in Fig. 1, jedoch in der geöffneten Ansaugstellung,

Fig. 3 einen konstruktiv etwas anders ausgebildeten Sauger, der sich wie in Fig. 1 in der Bereitschaftsstellung befindet,

Fig. 4 eine weitere mögliche Ausführungsform eines solchen Saugers.

In einem beispielsweise zylindrischen, unten offenen Ventilgehäuse 2, ist eine Zylinderkammer 4 angeordnet, in der ein Schaltkolben 6 axial zwischen zwei Endlagen (obere Ansaugstellung bzw. untere Bereitschaftsstellung) beweglich gelagert ist. Die dem Ventilgehäuse 2 zugewandte obere Schaltkolbenstirnfläche 8 ist mit einem nach oben vorstehenden Ventilzapfen 10 versehen, dessen Durchmesser 28 wesentlich kleiner ist als der Durchmesser 26 des Schaltkolbens 6. Der Ventilzapfen ist dazu vorgesehen, dicht passend in eine zur Atmosphäre führende Belüftungsöffnung oder -bohrung 12 im Zylindergehäuse einzugreifen und hat eine solche Höhe oder Länge (ab der oberen Schaltkolbenstirnfläche 8), daß die zwischen der oberen Schaltkolbenstirnfläche 8 und dem Ventilgehäuse 2 gebildete Zylinderkammer 4 gerade in der unteren Totpunktslage des Schaltkolbens 6 (Bereitschaftsstellung) mit Atmosphärendruck beaufschlagt wird. In der oberen Totpunktslage des Schaltkolbens 6 (der Ansaugstellung) befindet sich der Ventilzapfen 10 dicht passend in der Belüfungsöffnung 12, die zur Atmosphäre führt, so daß der Atmosphärendruck in dieser Stellung des Schaltkolbens nur auf den stark reduzierten Durchmesser 28 des Ventilzapfens 10 als Teil des Schaltkolbens 6 wirken kann.

Der Schaltkolben 6 ragt mit seinem von der Zylinderkammer 4 abgewandten Ende in eine erweiterte Ansaug- oder Ventilkammer 14 hinein, die in nicht näher dargestellter Weise abwechselnd mit Unterdruck und mit einem etwas höheren Druck, also ggf. dem Atmosphärendruck oder einem Atmosphärenüberdruck beaufschlagbar ist. Dies kann beispielsweise über ein ebenfalls nicht näher dargestelltes Zweiwegeventil geschehen. Die Ansaug- oder Ventilkammer wird an der vom Ventilgehäuse 2 abgewandten Seite von einer Ventilsitzplatte 16 abgeschlossen.

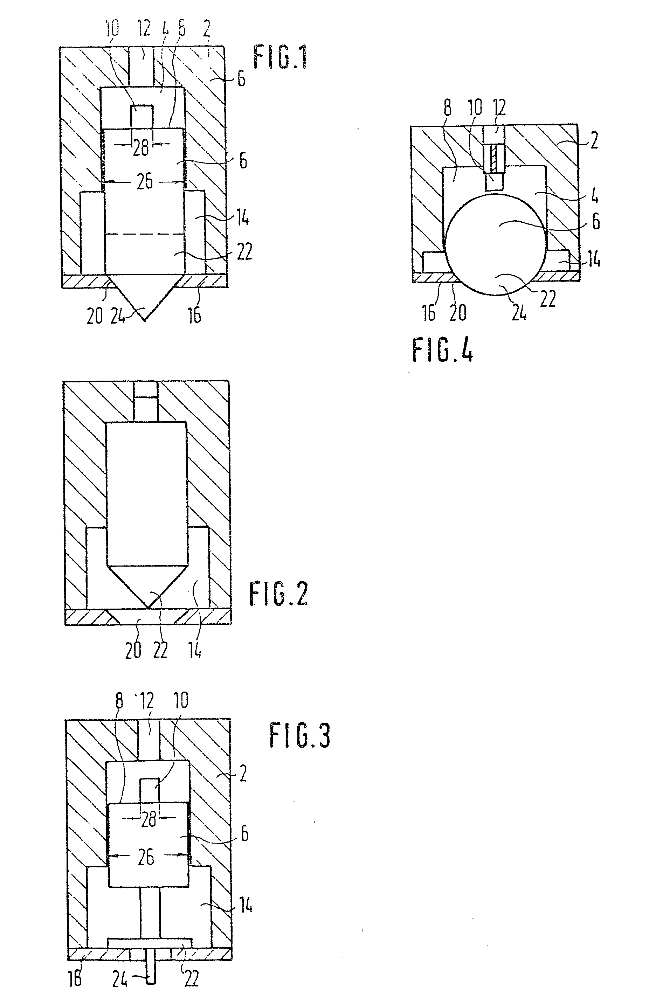

Die Ventilsitzplatte 16 weist entsprechend der Anordnung des Schaltkolbens 6 eine Ansaugventilöffnung 20 auf, deren Fläche (oder Durchmesser) kleiner ist als die Fläche bzw. der Durchmesser der vorübergehend dem Atmosphärendruck ausgestzten oberen Schaltkolbenstirnfläche 8, aber größer als die Fläche bzw. der Durchmesser des Ventilzapfens 10, der ständig dem Atmosphärendruck ausgesetzt ist. Der Schaltkolben 6 ist starr mit einem an seinem unteren, von der Zylinderkammer abgewandten Ende vorgesehenen Ventilglied 22 verbunden, das in der unteren (in Fig. 1, 3 oder 4 gezeigten) Stellung die Ansaugventilöffnung 20 verschließt. Das Ventilglied 22 ist mit einem die Ansaugventilöffnung nach unten durchsetzenden Ventilstössel 24 versehen, der beispielsweise stabförmig ausgebildet sein kann (Fig. 3) oder eine Einheit mit der kegelförmig oder spärisch ausgestalteten Ventilsitzfläche des Ventilgliedes 22 bildet. Der Ventilstössel hat mindestens eine solche vertikale Ausdehnung, daß er in der in den Fig. 1, 3 und 4 gezeigten unteren Stellung des Schaltkolbens 6 bzw. des Ventilgliedes 22 um einiges unter die untere Fläche der Ventilsitzplatte 16 hinausragt, so daß beim Aufsetzen des Saugers auf ein anzuhebendes Teil das Ventilglied 22 aufgestoßen wird, d.h. entgegen der letzteres beaufschlagenden resultierenden Schließkraft.

Die beschriebene Vorrichtung arbeitet in der folgenden Weise, und zwar augehend von der in den Fig. 1, 3 und 4 gezeigten Bereitschaftstellung. Zunächst ist die Ventilkammer 14 mit Unterdruck beaufschlagt und in der Zylinderkammer 4 und vor der Ansaugventilöffnung 20 herrscht Atmosphärendruck, da das Ventilglied 22 die Ansaugventilöffnung 20 hermetisch verschließt. Sobald der Sauger mit ausreichender Kraft auf ein anzuhebendes Gebilde abgesenkt wird, drückt der Ventilstössel 24 den Schaltkolben 6 und das Ventilglied 22 nach oben mit der Folge, daß der Ventilzapfen 10 in die Belüftungsöffnung 12 eintritt. Dadurch wirkt der Atmosphärendruck der Belüftungsöffnung 12 nur noch auf die stark verringerte Fläche des Ventilzapfens 10, so daß die auf den Schaltkolben nach unten gerichtete Kraft sehr stark verringert ist. Andererseits ergibt sich durch das Abheben des Ventilgliedes 22 von der Ansaugventilöffnung 20, daß der Unterdruck in der Ventilkammer 14 in nicht unerheblichem Maße abnimmt (der absolute Druck steigt), so daß der in der Ventilkammer vorherrschende erhöhte Druck über die aufwärts weisenden Flächen des Ventilgliedes 22 bzw. des Schaltkolbens eine aufwärts gerichtete Kraft erzeugt, die im Zusammenwirken mit der sich durch die Ansaugventilöffnung 20 einstellenden heftigen Strömung die abwärts wirkende Kraft einschließlich des Gewichtes des Schaltkolbens 6 bzw. Ventilgliedes 22 übertrifft. Damit ist dann der Sauger aktiviert und der Schaltkolben 6 bzw. das Ventilglied 22 bleibt in der aktiven angehobenen Stellung, bis der Unterdruck in der Ansaug- oder Ventilkammer 14 über geeignete Mittel, z.B. das vorerwähnte Zweiwegeventil auf Atmosphärendruck oder einen Überdruck erhöht wird. Dies hat zur Folge, daß Luftströmung durch die Öffnung 20 und damit die Ansaugwirkung auf das angehobene Gebilde aufhört, das daraufhin vom Sauger abfällt. Der Schaltkolben 6 bzw. das Ventilglied 22 fällt infolge des Eigengewichtes wieder auf die Ventilsitzplatte 16 herab und dichtet gegen die Ansaugventilöffnung 20 ab, woraufhin die Ventilkammer 14 wieder mit Unterdruck beaufschlagt werden kann. Dabei hebt das Ventilglied 22 trotz des dann in der Ventilkammer 14 herrschenden Unterdruckes un des an der Ansaugventilöffnung 20 von außen anliegenden Atmosphärendruckes nicht ab, weil die dem von außen wirkenden Atmosphärendruckes nicht ab, weil die dem von außen wirkenden Atmosphärendruck ausgesetzte Ansaugventilöffnung 20 eine wesentlich geringere Fläche aufweist als die ebenfalls dem Atmosphärendruck in dieser Stellung des Schaltkolbens 6 ausgesetzte obere Schaltkolbenstirnfläche 8 (einschließlich der Stirnfläche des Ventilzapfens 10).

Durch eine geeignete Bemessung des Ventilzapfens 10, der oberen Schaltkolbenstirnfläche 8 und der Ansaugventilöffnung 20 im Verhältnis zueinander bzw. zu dem Atmosphärendruck und dem in der Ventilkammer 14 angelegten Unterdruck gelingt es ohne weiteres, das Ventilglied 22 zu veranlassen, die Ansaugventilöffnung 20 zuverlässig zu schließen und gleichzeitig nach einem mechanischen Aufdrücken über den Ventilstössel 24 in der aktiven Stellung bzw. in der Ansaugstellung zu bleiben, bis der Unterdruck in der Ansaug- oder Ventilkammer 14 durch Abschalten der Unterdruckquelle und ggf. Zuschalten einer Überdruckquelle beseitigt wird.

In Fig. 4 ist eine Ausführungsform des erfindungsgemäßen Saugers gezeigt, bei der der Schaltkolben 6, das Ventilglied 22 und der Ventilstössel 24 als einheitliches Bauteil in Gestalt einer Ventilkugel vorliegt. Grundsätzlich arbeitet dieser Sauger in der gleichen Weise wie die zuvor beschriebenen Ausführungsformen. Gleiche Bezugszeichen bezeichnen entsprechende Teile des Saugers. Im Unterschied zu den beiden Ausführungsformen gemäß Fig. 1 bis 3 liegt hierbei jedoch der Ventilzapfen 10 frei auf der Kugel auf. Um ihn dabei auf die Belüftungsbohrung 12 ausgerichtet zu halten, ist er zusätzlich mit einem nach oben vorstehenden, in die Belüftungsbohrung eingreifenden Führungsansatz versehen, der in einem Horizontalschnitt etwa die Form eines Kreuzes hat, so daß in der Stellung der Fig. 4 der Atmosphärendruck über die Belüftungsbohrung 12 dennoch auf die Zylinderkammer 4 einwirken kann. In der aktivierten Stellung (Ansaugstellung), in der die Ventilkugel ähnlich wie in der Fig. 2 nach oben verschoben ist, sperrt der Ventilzapfen 10 die Belüftungsbohrung 12 gegenüber der Kammer 4 ab.

Ein wesentlicher Vorteil einer auf dem Prinzip dieser Sauger beruhenden Hebevorrichtung besteht darin, daß nur so viele Ventile mechanisch geöffnet werden, wie entsprechend dem Umriß des anzuhebenden Gebildes oder der vorgebohrten Leiterplatte benötigt werden. Die übrigen in der ggf. sehr viel größeren Hebevorrichtung vorgesehenen Ausaugöffnungen 20 werden nicht geöffnet, da die zugehörigen Ventilstössel 24 auf keine anzuhebende Lochplatte treffen und somit gar nicht erst geöffnet werden. Damit stellt sich die Hebevorrichtung von ganz allein auf den benötigten Umriß ein und die Vakuumpumpe zur Erzeugung des Unterdrucks in der Ventilkammer 14 wird nur soweit wie nötig belastet.

Ein weiterer Vorteil der mit derartigen Ventilen arbeitenden Hebevorrichtung besteht darin, daß keine vorgespannten Druckfedern benötigt werden, um das Ventilglied 22 zunächst (d.h. in der Bereitschaftsstellung) trotz des in der Ventilkammer 14 vorherrschenden Unterdruckes in der die Ansaugventilöffnung 20 verschließenden Position zu halten. Eine solche Druckfeder hätte nämlich den Nachteil, daß die Vakuumpumpe für den Unterdruck in der Ansaug- oder Ventilkammer 14 nicht nur den Unterdruck zum Ansaugen bzw. Festhalten der anzuhebenden Lochplatte zu erzeugen hätte, sondern auch für die Kraft zum Zusammendrücken der Feder sorgen müßte, die das Ventilglied 22 ständig in die die Ansaugventilöffnung 20 verschließende Stellung zu drängen sucht.

In den Zeichnungen ist nur ein Ventilglied/Schaltkolben gezeigt. Es liegt auf der Hand, daß die Hebevorichtung eine Mehrzahl solcher Schaltventile aufweist, die über die gesamte Fläche der Hebevorrichtung gleichmäßig verteilt angeordnet sind. In einem praktischen Ausführungsbeispiel weist eine 600 × 600 mm große Hebevorrichtung insgesamt 36 derartiger Schaltventile auf.

Anstelle der in den Fig. 1 und 2 gezeigten, kegelig ausgebildeten Ventilsitzfläche des Ventilgliedes 22 kann hier auch eine Halbkugel vorgesehen werden, die dann teilweise aus der Öffnung 20 herausragen und gleichzeitig die Funktion des Ventilstössels 24 übernehmen würde. Selbst wenn der Schaltkolben 6 und das Ventilglied 22 als einheitliches Bauteil in Form einer Kuger ausgeführt währen, würde sich an der Funktion der Vorrichtung grundsätzlich nichts ändern. Gleiches gilt auch für den Fall, daß der Ventilzapfen 10 als separates Bauteil einfach auf dem Schaltkolben 6 frei aufliegt, dafür aber mit einem nach oben aufragenden die Belüftungsbohrung 12 nicht verschließenden, in letztere eingreifenden Führungsansatz versehen ist.

Für die Verwendung einer solchen Hebevorrichtung im Zusammenhang mit einem Leiterplattenprüfgerät kann es erforderlich sein, daß zumindest die Ventilsitzplatte 16 und der jeweils an der Leiterplatte angreifende Ventilstössel 24 aus nichtleitendem Material wie Kunststoff hergestellt sind, um bei der Prüfung der Leiterplatte keine ungewollten Kurzschlüsse zu erzeugen.

Es ist möglich, den erfindungsgemäßen Sauger bzw. die daraus aufgebaute Hebevorrichtung auch in einer (gegenüber den Zeichnungen) um 180° verdrehten Lage zu benutzen, so daß die Ansaugöffnungen senkrecht nach oben weisen - etwa zum Festlegen oder Fixieren eines darauf abgelegten Gegenstandes. Zu diesem Zweck muß dann eine (sehr schwache) Druckfeder in dem Sauger vorgesehen sein, die gerade nur so stark ist, daß sie das Eigengewicht von Schaltkolben plus Ventilglied und Stößel geringfügig überkompensiert, um dem Ventilglied auch in einer solchen Gebrauchslage des Saugers bzw. der Hebevorrichtung zu ermöglichen, immer in die Ausgangslage gemäß Fig. 1, 2 oder 4 von selbst zurückkehren zu können.

## Patentansprüche

1. Mechanisch aktivierbarer Sauger zum Anheben und Festhalten von Gegenständen mit einem Gehäuse (2), einer Ansaugkammer (14) und einer Ansaugöffnung (20) in der Unterseite des Gehäuses, wobei der Ansaugöffnung (20) ein Ventilglied (22) zugeordnet ist, welches die Öffnung entgegen dem Atmosphärendurck verschließt und einen die Öffnung (20) nach unten durchsetzenden, aus dem Gehäuse herausragenden Ventilstößel (24) aufweist, dadurch gekennzeichnet daß mit dem Ventilglied (22) ein verbunden Schaltkolben (6) ist, der auf der vom Ventilglied (22) in Öffnungsrichtung abgewandten Seite der Ansaugkammer (14) in einer Zylinderkammer (4) dicht passend axial verschieblich angeordnet ist und bei verschlossener Öffnung (20) auf seinem vollen Durchmesser (26) und bei freigegebener Öffnung (20) auf einem reduzierten Durchmesser (28) vom Atmosphärendruck beaufschlagt ist, und daß die Fläche des vollen Schaltkolbendurchmessers (26) wesentlich größer ist als die Fläche der Öffnung (20), die ihrerseits wesentlich größer ist als die Fläche des reduzierten Schaltkolbendurchmessers (28).

2. Sauger nach Anspruch 1, dadurch gekennzeichnet, daß die vom Ventilglied (22) abgewandte Stirnfläche des Schaltkolbens (6) einen den reduzierten Durchmesser (28) aufweisenden Ventilzapfen (10) trägt, der bei von der Öffnung (20) abgehobenem Ventilglied (22) dicht passend in eine zur Atmosphäre führende Belüftungsbohrung (12) im Schaltkolbengehäuse (Zylindergehäuse 2) eintritt.

3. Sauger nach Anspruch 1 oder 2, dadurch gekennzeichnet, daß der Schaltkolben (6) und das Ventilglied (22) ein einheitliches zylindrisches Bauteil bilden.

4. Sauger nach einem der voranstehenden Ansprüche, dadurch gekennzeichnet, daß die die Öffnung (20) verschließende Ventilsitzfläche des Ventilgliedes (22) kegelig ausgebildet ist derart, daß die Spitze des Kegels die Öffnung (20) durchsetzt und somit den Ventilstößel (24) ausbildet.

5. Sauger nach einem der Ansprüche 1 bis 3, dadurch gekennzeichnet, daß die die Öffnung (20) verschließende Ventilsitzfläche des Ventilgliedes (22) halbkugelig ausgebildet ist derart, daß die Halbkugel die Öffnung (20) teilweise durchsetzt und somit den Ventilstößel (24) ausbildet.

6. Sauger nach Anspruch 1 oder 2, dadurch gekennzeichnet, daß Schaltkolben (6) und Ventilglied (22) als einheitliches Bauteil in Form einer Ventilkugel ausgebildet sind, die die Öffnung (20) teilweise durchsetzt und somit den Ventilstößel (24) ausbildet.

7. Vakuumbetriebene Hebevorrichtung für luftdurchlässige flächige Gegenstände variabler Umrisse, insbesondere für vorgebohrte Leiterplatten, mit einer Mehrzahl von gleichmäßig verteilten Saugern nach einem der voranstehenden Ansprüche.

## Claims

1. A mechanically operable suction device for lifting and holding objects, with a housing (2), an intake chamber (14) and an intake orifice (20) in the underside of the housing, wherein the intake orifice (20) is provided with a valve member (22) which seals the orifice from atmospheric pressure and comprises a valve plunger (24) which passes downwards through the orifice (20) and projects from the housing, characterised in that to the valve member (22) there is connected a control piston (6) which is arranged so as to be axially movable and to fit tightly in a cylindrical chamber (4) on the side of the intake chamber (14) remote from the valve member (22) in the opening direction and which is charged with atmospheric pressure over a complete diameter (26) when the orifice (20) is sealed and over a reduced diameter (28) when the orifice (20) is cleared, and in that the area of the complete control piston diameter (26) is substantially greater than the area of the orifice (20) which, in turn, is substantially greater than the area of the reduced control piston diameter (28).

2. A suction device according to claim 1, characterised in that the end face of the control piston (6) remote frome the valve member (22) bears a valve stud (10) which has the reduced diameter (28) and enters with a tight fit into a port (12) in the control piston housing (cylinder housing 2) leading to the atmosphere when the valve member (22) is removed from the orifice (20).

3. A suction device according to claim 1 or 2, characterised in that the control piston (6) and the valve member (22) form a uniform cylindrical component.

4. A suction device according to one of the preceding claims, characterised in that the valve seat face of the valve member (22) sealing the orifice (20) is conical in construction so that the tip of the cone passes through the orifice (20) and thus forms the valve plunger (24).

5. A suction device according to one of claims 1 to 3, characterised in that the valve seat face of the valve member (22) sealing the orifice (20) is hemispherical in construction so that the hemisphere passes partially through the orifice (20) and thus forms the valve plunger (24).

6. A suction device according to claim 1 or 2, characterised in that the control piston (6) and valve member (22) are constructed as an integral component in the form of a valve sphere which passes partially through the orifice (20) and thus forms the valve plunger (24).

7. A vacuum-operated lifting device for air-permeable flat objects having variable contours, in particular for pre-bored printed circuit boards with a plurality of uniformly distributed suction devices according to one of the preceding claims.

**Revendications**

1. Suceur pour soulever et maintenir des objets et qui est rendu actif mécaniquement, comprenant un corps (2), une chambre d'aspiration (14) et une ouverture d'aspiration (20) dans le côté inférieur du corps, avec coordination à l'ouverture d'aspiration (20) d'un obturateur de soupape (22) capable de fermer l'ouverture à l'encontre de la pression atmosphérique et possédant un poussoir de soupape (24) qui traverse l'ouverture (20) vers le bas et fait saillie hors du corps, caractérisé en ce que l'obturateur (22) est solidaire d'un piston de commande (6) ajusté étanche et axialement coulissant dans une chambre de cylindre (4) du côté de la chambre d'aspiration (14) opposé à l'ouverture, piston qui est exposé à la pression atmosphérique sur tout son diamètre (26) quand l'ouverture (20) est fermée et sur un diamètre réduit (28) quand l'ouverture (20) est découverte, et que l'aire de piston correspondant à tout son diamètre (26) est nettement plus grande que l'aire de l'ouverture (20), qui est elle-même nettement plus grande que l'aire de diamètre réduit (28) du piston de commande.

2. Suceur selon la revendication 1, caractérisé en ce que la face d'extrémité du piston (16) opposée à l'obturateur (22) porte un téton de soupape (10) qui présente le diamètre réduit (28) et qui, quand l'obturateur (22) est levé de l'ouverture (20), pénètre à joint étanche dans un orifice d'admission d'air (12) ménagé dans le corps (2) et menant à l'atmosphère.

3. Suceur selon la revendication 1 ou 2, caractérisé en ce que le piston (6) et l'obturateur (22) sont formés par une seule pièce cylindrique.

4. Suceur selon une des revendications précédentes, caractérisé en ce que la surface d'appui de l'obturateur (22), surface qui s'applique contre le siège de soupape pour fermer l'ouverture (20), possède une forme conique telle que le cône définissant cette surface comporte un sommet qui traverse l'ouverture (20) et constitue ainsi le poussoir de soupape (24).

5. Suceur selon une des revendications 1 à 3, caractérisé en ce que la surface d'appui de l'obturateur (22) surface qui s'applique contre le siège de soupage pour fermer l'ouverture (20), possède une forme hémisphérique telle que la demi-sphère définissant cette surface traverse en partie l'ouverture (20) et constitue ainsi le poussoir de soupape (24).

6. Suceur selon la revendication 1 ou 2, caractérisé en ce que le piston de commande (6) et l'obturateur (22) sont constitués par une pièce unique ayant la forme d'une bille qui traverse en partie l'ouverture (20) et constitue en même temps le poussoir (24).

7. Dispositif de levage actionné par le vide, pour objets plans laissant passer l'air et ayant des contours variables, en particulier pour plaques ou cartes à circuits imprimés qui ont été percées au préalable, dispositif qui comporte un certain nombre de suceurs, selon une des revendications précédentes, qui sont uniformément réparties.

FIG.1

FIG.4

FIG.2

FIG.3